# EUROPEAN PATENT APPLICATION

(11) **EP 4 554 034 A1**
(43) Date of publication of application: **14.05.2025**
(21) Application number: 24211365.2
(22) Date of filing: 07.11.2024
(51) Int. Cl.: H02J 3/38, H02J 3/46

(54) **MICROGRID INVERTER, MICROGRID SYSTEM, AND METHOD FOR CONTROLLING MICROGRID INVERTER**

(30) Priority: 08.11.2023 CN 202311481745
(71) Applicant: Sungrow Power Supply Co., Ltd., Hefei, Anhui 230088 (CN)
(72) Inventor: Xu, Jincheng, 230088 Hefei (CN); Jiang, Anying, 230088 Hefei (CN); Yu, Yanfei, 230088 Hefei (CN)
(74) Representative: Epping - Hermann - Fischer

(57) **Abstract**

A microgrid inverter is provided, including: a controller, an inverter circuit, and a voltage sampling circuit. A first terminal of the inverter circuit is connected to a renewable power source. An off-grid port of the inverter circuit is connected to a load. A grid-connected port of the inverter circuit is connected an output terminal of a diesel generator. The voltage sampling circuit samples an output voltage of the diesel generator. The controller is configured to modify an output power of the inverter circuit based on at least one of an amplitude, an effective value or a frequency of the output voltage of the diesel generator to control the output voltage to be within a predetermined range. The microgrid inverter may perform control only based on the data of output voltage collected from the diesel generator without establishing a communication connection, avoiding injecting excess power from the inverter circuit to the diesel generator. The microgrid inverter is simple and has no communication delay, thereby ensuring the stability of the microgrid system.

## Description

### FIELD

The present disclosure relates to the technical field of microgrid systems, and in particular to a microgrid inverter, a microgrid system, and a method for controlling the microgrid inverter.

### BACKGROUND

A miniature power grid system, abbreviated as a microgrid system, is a small-scale power generation and distribution system that includes a power source, an inverter, and a related controller. The microgrid system operates autonomously in isolation, or is connected to an external power grid.

In a microgrid system, the power source includes a diesel generator and a renewable power source, power generated by the renewable power source is converted by the inverter, and the renewable energy source and the diesel generator provide power together. In order to prevent damage to the diesel generator resulted from that the output power of the inverter is injected back to the diesel generator when a power of a load suddenly changes, the output power of the inverter is to be modified during operation in real time.

According to the conversional technology, a monitoring device may be adopted to be communicatively connected to the load, the inverter and the diesel generator, monitor the power of the load, the output power of the inverter and a power of the diesel generator in real time, and perform power scheduling. However, multiple powers are to be monitored in the above process, and thus the process is complex and has a communication delay.

### SUMMARY

In view of this, a microgrid inverter, a microgrid system, and a method for controlling the microgrid inverter are provided according to the present disclosure, to modify the output power of the inverter in real time without communication connection, and ensure the stability of the microgrid system.

A microgrid inverter is provided according to the present disclosure. The microgrid inverter includes: a controller, an inverter circuit, and a voltage sampling circuit. A first terminal of the inverter circuit is configured to connect a renewable power source. An off-grid port of the inverter circuit is configured to connect a load. A grid-connected port of the inverter circuit is configured to connect an output terminal of a diesel generator. The voltage sampling circuit is configured to sample an output voltage of the diesel generator. The controller is configured to modify an output power of the inverter circuit based on at least one of an amplitude, an effective value or a frequency of the output voltage of the diesel generator to control the output voltage to be within a predetermined range.

In an embodiment, the controller is configured to: obtain the frequency of the output voltage; and decrease, in a case that the frequency of the output voltage is greater than a maximum value in a predetermined frequency range, the output power of the inverter circuit to control the frequency of the output voltage to be within the predetermined frequency range.

In an embodiment, the controller is configured to: obtain the frequency of the output voltage; and increase, in a case that the frequency of the output voltage is less than a minimum value in a predetermined frequency range, the output power of the inverter circuit to control the frequency of the output voltage to be within the predetermined frequency range.

In an embodiment, the controller is configured to modify the output power of the inverter circuit based on a difference between the frequency of the output voltage and the predetermined frequency range to control the frequency of the output voltage to be within the predetermined frequency range.

In an embodiment, the controller is configured to modify the output power of the inverter circuit based on a mapping relationship between the frequency of the output voltage and a power to control the frequency of the output voltage to be within the predetermined frequency range.

In an embodiment, for modifying the output power of the inverter circuit, the controller is configured to: obtain the frequency of the output voltage; and modify, in a case that the frequency of the output voltage is not within the predetermined frequency range, an output current of the inverter circuit based on the frequency of the output voltage to control the frequency of the output voltage to be within the predetermined frequency range.

In an embodiment, the controller is configured to modify the output power of the inverter circuit based on the amplitude of the output voltage of the diesel generator to control the amplitude of the output voltage to be within a predetermined amplitude range.

A microgrid system is further provided according to the present disclosure. The microgrid system includes: a diesel generator, a renewable power source, and the microgrid inverter described above. A first terminal of the microgrid inverter is connected to the renewable power source. A grid-connected port of the microgrid inverter is connected to an output terminal of the diesel generator. An off-grid port of the microgrid inverter is configured to connect a load. The microgrid inverter is configured to supply power to the load.

In an embodiment, the renewable power source includes at least one of a photovoltaic array and an energy storage device. In a case that the renewable power source includes the photovoltaic array, the inverter circuit includes a first inverter circuit, a first terminal of the first inverter circuit is connected to the photovoltaic array, and a second terminal of the first inverter circuit is connected to the grid-connected port. In a case that the renewable power source includes the photovoltaic array and the energy storage device, the inverter circuit further includes a second inverter circuit, a first terminal of the second inverter circuit is connected to the energy storage device, and a second terminal of the second inverter circuit is connected to the grid-connected port.

A method for controlling a microgrid inverter is further provided according to the present disclosure. The microgrid inverter includes an inverter circuit and a voltage sampling circuit. A first terminal of the inverter circuit is configured to connect a renewable power source. An off-grid port of the inverter circuit is configured to connect a load. A grid-connected port of the inverter circuit is configured to connect an output terminal of a diesel generator. The method includes: sampling an output voltage of the diesel generator by the voltage sampling circuit; and modifying an output power of the inverter circuit based on at least one of an amplitude, an effective value or a frequency of the output voltage of the diesel generator to control the output voltage to be within a predetermined range.

In an embodiment, the modifying an output power of the inverter circuit based on a frequency of the output voltage includes: obtaining the frequency of the output voltage; and decreasing, in a case that the frequency of the output voltage is greater than a maximum value in a predetermined frequency range, the output power of the inverter circuit to control the frequency of the output voltage to be within the predetermined frequency range.

In an embodiment, the modifying an output power of the inverter circuit based on a frequency of the output voltage includes: obtaining the frequency of the output voltage; and increasing, in a case that the frequency of the output voltage is less than a minimum value in a predetermined frequency range, the output power of the inverter circuit to control the frequency of the output voltage to be within the predetermined frequency range.

In an embodiment, the modifying an output power of the inverter circuit based on the output voltage includes: modifying the output power of the inverter circuit based on a difference between the frequency of the output voltage and the predetermined frequency range to control the frequency of the output voltage to be within the predetermined frequency range.

In an embodiment, the modifying an output power of the inverter circuit based on the output voltage includes: modifying the output power of the inverter circuit based on a mapping relationship between the frequency of the output voltage and a power to control the frequency of the output voltage to be within the predetermined frequency range.

Therefore, the following beneficial effects can be achieved according to the present disclosure.

The microgrid inverter according to the present disclosure includes: a controller, an inverter circuit, and a voltage sampling circuit. A first terminal of the inverter circuit is configured to connect a renewable power source. An off-grid port of the inverter circuit is configured to connect a load. A grid-connected port of the inverter circuit is configured to connect an output terminal of a diesel generator. The voltage sampling circuit is configured to sample an output voltage of the diesel generator. Generally, the renewable power source and the diesel generator supply power to the load together. In a case that the load suddenly changes, such as a sudden load increase or a sudden load decrease, the controller modifies the output power of the inverter circuit based on the output voltage of the diesel generator to prevent excess power from being injected back to the diesel generator, ensuring the stable operation of the microgrid system. In the microgrid inverter according to the present disclosure, only the output voltage of the diesel generator is sampled without establishing a communication connection, so as to perform a corresponding modification, preventing excess power of the inverter circuit from being injected back to the diesel generator. The modification process is simple and has no communication delay, thereby ensuring the stability of the microgrid system.

### BRIEF DESCRIPTION OF THE DRAWINGS

Figure 1 is a schematic diagram of a microgrid system;
Figure 2 is a schematic diagram of a microgrid inverter according to an embodiment of the present disclosure;
Figure 3 is a schematic diagram showing a variation curve of an output power of an inverter circuit with a frequency of an output voltage of a diesel generator according to an embodiment of the present disclosure;
Figure 4 is a schematic diagram of a microgrid system in stable operation according to an embodiment of the present disclosure;
Figure 5 is a schematic diagram of a microgrid inverter according to another embodiment of the present disclosure;
Figure 6 is a schematic diagram of a microgrid system according to an embodiment of the present disclosure; and
Figure 7 is a flowchart of a method for controlling a microgrid inverter according to an embodiment of the present disclosure.

### DETAILED DESCRIPTION

In order to enable those skilled in the art to understand and implement the technical solutions according to the present disclosure, a detailed application scenario of the present disclosure is described below.

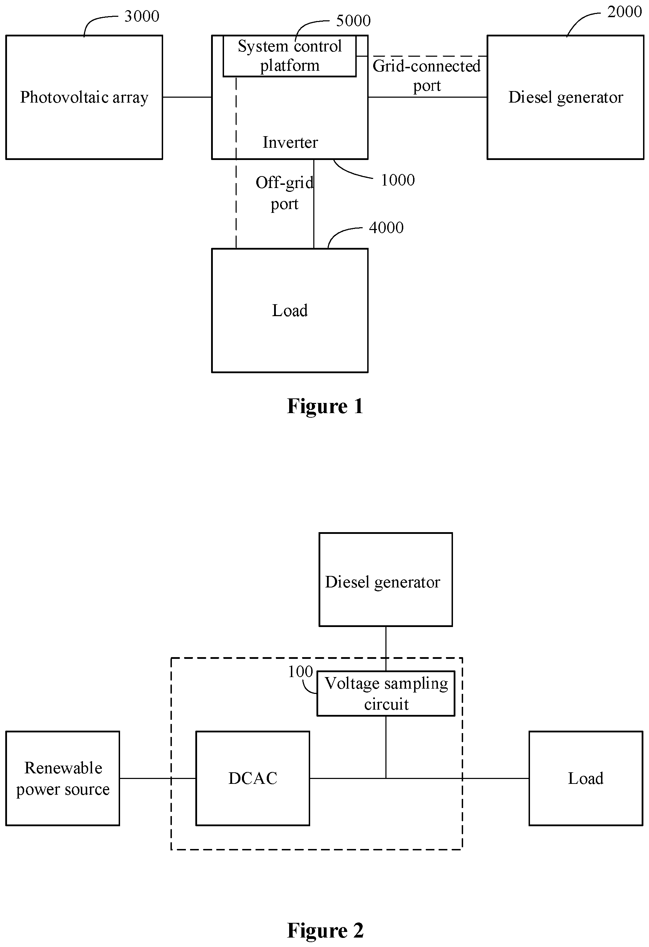

Referring to Figure 1, Figure 1 is a schematic diagram of a microgrid system.

A type of a renewable power source in the microgrid system is not limited in the present disclosure. In this scenario, descriptions are provided by taking the renewable power source as a photovoltaic array as an example.

The microgrid system includes: an inverter 1000, a diesel generator 2000, a photovoltaic array 3000, a load 4000, and a system control platform 5000.

For the convenience of introduction, descriptions are provided by taking the system control platform 5000 arranged inside the inverter 1000 as an example in this scenario.

The photovoltaic array 3000 is connected to a first terminal of the inverter 1000, and a second terminal of the inverter 1000 is connected to the load 4000. The inverter 1000 is configured to convert direct-current power outputted from the photovoltaic array 3000 to alternating-current power for the load 4000.

The diesel generator 2000 is connected to a third terminal of the inverter 1000. The second terminal of the inverter 1000 is connected to the third terminal of the inverter 1000. That is, the diesel generator 2000 and an inverter circuit in the inverter 1000 operate in parallel, and supply power to the load 4000 together.

When a power of the load 4000 suddenly changes, the micro-grid system modifies an output power of the inverter 1000, to prevent the excess output power from being injected back to the diesel generator 2000. It should be understood that the diesel generator 2000 is a power generation device that cannot absorb power, and thus the power injected back to the diesel generator 2000 may cause a malfunction of the diesel generator 2000, affecting the operation of the microgrid system.

In order to modify the output power of the inverter 1000, the system control platform 5000 is communicatively connected to the diesel generator 2000 and the load 4000. In Figure 1, the communication connections are represented by dashed lines. The system control platform 5000 monitors the output power of the inverter 1000, a power of the diesel generator, and the power of the load in real time and performs power scheduling to modify the output power of the inverter 1000.

However, the system control platform is required to monitor various powers and acquire these powers through the communication connections, and thus the modification manner and the connection of the system are complex, and the modification process has a communication delay.

Hereinafter, the embodiments of the present disclosure are described in detail with reference to drawings and in conjunction with specific implementations.

Referring to Figure 2, Figure 2 is a schematic diagram of a microgrid inverter according to an embodiment of the present disclosure.

The microgrid inverter according to the embodiment of the present disclosure includes: a controller (not shown in Figure 2), an inverter circuit DCAC, and a voltage sampling circuit 100.

A first terminal of the inverter circuit DCAC is configured to connect a renewable power source.

The type of the renewable power source is not limited in the present disclosure. For example, the renewable power source may be a photovoltaic array, an energy storage device, or a fuel cell.

An off-grid port of the inverter circuit DCAC is configured to connect a load.

A grid-connected port of the inverter circuit DCAC is configured to connect an output terminal of a diesel generator.

It should be understood that a relay is connected between the grid-connected port of and the off-grid port of the inverter circuit, and the grid-connected port and the off-grid port are not the same port. Only when the internal relay is closed, the grid-connected port is connected to the off-grid port.

The voltage sampling circuit 100 is configured to sample an output voltage of the diesel generator.

It should be understood that the output voltage of the diesel generator is an alternating-current voltage with a frequency.

The controller is configured to modify an output power of the inverter circuit based on at least one of an amplitude, an effective value or a frequency of the output voltage of the diesel generator to control the output voltage to be within a predetermined range.

In the embodiment of the present disclosure, it is not limited to modifying the output power of the inverter circuit based on the amplitude, the effective value or the frequency of the output voltage, and the modification may be performed based on any one of the amplitude, the effective value and the frequency of the output voltage. For example, the controller is configured to modify the output power of the inverter circuit based on the amplitude of the output voltage of the diesel generator to control the amplitude of the output voltage to be within a predetermined amplitude range.

To achieve high efficiency and timely response, the frequency may serve as a response parameter. The output power of the inverter circuit is modified based on the frequency, thereby achieving a rapid response and preventing power from being injected back to the diesel generator.

For the convenience of introduction and understanding, the following embodiments are introduced with an example that the controller modifies the output power of the inverter circuit based on the frequency of the output voltage.

A manner in which the frequency is obtained based on the output voltage of the diesel generator sampled by the voltage sampling circuit 100 is not limited in the present disclosure. For example, in some embodiments, the frequency of the output voltage is calculated using a software phase-locked loop.

In a case of power balance of the microgrid system, the frequency of the output voltage of the diesel generator remains stable. In the microgrid system, in a case that a power provided by the power generation device is greater than a power consumed by the load, the frequency of the output voltage increases; and in a case that the power provided by the power generation device is less than the power consumed by the load, the frequency of the output voltage decreases. Therefore, it is determined whether power balance is achieved between various parts of the microgrid system by monitoring the frequency of the output voltage of the diesel generator, and thus the power is modified based on the frequency of the output voltage.

In the embodiment of the present disclosure, the power generation device includes the renewable power source and the diesel generator. Therefore, the power provided by the power generation device is modified by modifying the output power of the inverter circuit DCAC. The power provided by the power generation device is positively correlated with the frequency of the output voltage. Therefore, a direction in which the output power is modified is opposite to a direction in which the frequency varies, in order to maintain the power balance.

The microgrid inverter according to the embodiment of the present disclosure includes: the controller, the inverter circuit, and the voltage sampling circuit. The first terminal of the inverter circuit is configured to connect a renewable power source. A second terminal of the inverter circuit is configured to connect a load. The second terminal of the inverter circuit is further configured to connect the output terminal of the diesel generator. The voltage sampling circuit is configured to sample the output voltage of the diesel generator. Generally, the renewable power source and the diesel generator supply power to the load together. The controller is configured to obtain a frequency of the output voltage, and modify an output power of the second terminal of the inverter circuit based on the frequency of the output voltage. The direction in which the output power is modified is opposite to the direction in which the frequency varies. In a case that the load suddenly changes, such as a sudden load increase or a sudden load decrease, the controller modifies the output power of the second terminal of the inverter circuit to prevent excess power from being injected to the diesel generator, ensuring the stable operation of the microgrid system. In a case that the power provided by the power generation device is greater than the power consumed by the load, the frequency of the output voltage increases. Since the direction in which the output power is modified is opposite to the direction in which the frequency varies, when the frequency of the output voltage of the diesel generator increases, the output power of the second terminal of the inverter circuit is decreased. In the microgrid inverter according to the embodiment of the present disclosure, only the output voltage of the diesel generator is sampled without establishing a communication connection, and the frequency of the output voltage is obtained, so as to perform a corresponding modification, preventing excess power of the inverter circuit from being injected back to the diesel generator. The modification process is simple and has no communication delay, thereby ensuring the stability of the microgrid system.

In the embodiment of the present disclosure, the manner in which the output power of the inverter circuit is modified based on the frequency is not limited. For example, for the convenience of power modification, a frequency range may be predetermined. In a case that the frequency of the output voltage is within the predetermined frequency range, power modification is not triggered. In a case that the frequency of the output voltage is not within the predetermined frequency range, power modification is triggered. The predetermined frequency range is not limited in the present disclosure. For example, for a rated frequency of 50Hz, the predetermined frequency range may be a range from 48Hz to 52Hz, a maximum value in the predetermined frequency range is 52Hz and a minimum value in the predetermined frequency range is 48Hz. In a case that the frequency of the output voltage is greater than the maximum value or less than the minimum value, the output power is modified.

The controller is configured to: obtain the frequency of the output voltage; and decrease, in a case that the frequency of the output voltage is greater than the maximum value in the predetermined frequency range, the output power of the inverter circuit to control the frequency of the output voltage to be within the predetermined frequency range.

The controller is configured to: obtain the frequency of the output voltage; and increase, in a case that the frequency of the output voltage is less than the minimum value in the predetermined frequency range, the output power of the inverter circuit to control the frequency of the output voltage to be within the predetermined frequency range.

The controller is configured to modify the output power of the inverter circuit based on a difference between the frequency of the output voltage and the predetermined frequency range to control the frequency of the output voltage to be within the predetermined frequency range. For example, proportional control is performed on the difference to obtain the output power or an modification value of the output power, proportional integral control or slope control is performed on the difference to obtain the output power or an modification value of the output power.

The controller is configured to modify the output power of the inverter circuit based on a mapping relationship between the frequency of the output voltage and a power to control the frequency of the output voltage to be within the predetermined frequency range. That is, a mapping relationship curve may be obtained in advance and then the output power is directly modified based on the mapping relationship curve, or the output power is directly modified by querying a table.

Correspondingly, the controller is configured to decrease the output power of the second terminal of the inverter circuit in a case that the frequency of the output voltage is greater than a predetermined frequency. The controller is configured to increase the output power of the second terminal of the inverter circuit in a case that the frequency of the output voltage is less than the predetermined frequency.

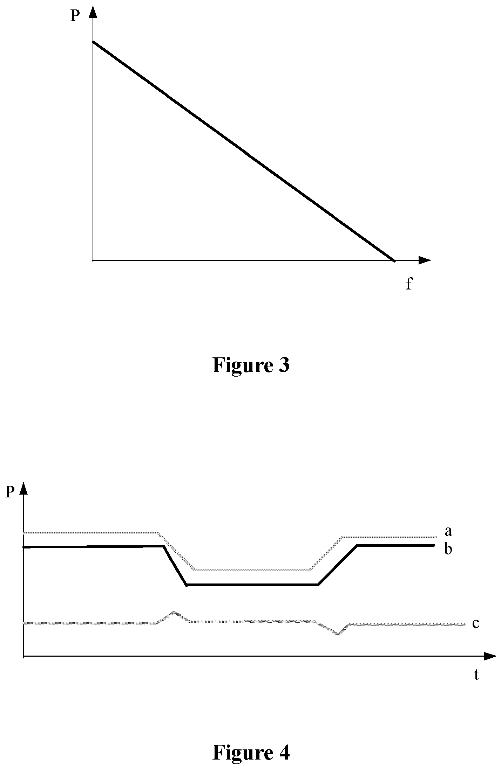

In order to enable those skilled in the art to better understand the technical solutions according to the embodiments of the present disclosure, referring to Figure 3, Figure 3 is a schematic diagram showing a variation curve of an output power of an inverter circuit with a frequency of an output voltage of a diesel generator according to an embodiment of the present disclosure.

In Figure 3, the horizontal axis represents the frequency of the output voltage of the diesel generator, and the vertical axis represents the output power of the second terminal of the inverter circuit.

It can be seen form Figure 3 that, as the frequency of the output voltage of the diesel generator gradually increases, the output power of the inverter circuit gradually decreases.

It should be understood that in a case that the renewable power source connected to the first terminal of the inverter circuit may accommodate electrical energy, for example, the renewable power source is an energy storage device, the output power of the inverter circuit may gradually decrease to a negative value, indicating that the renewable power source absorbs power.

In order to intuitively demonstrate the technical effects achieved by the microgrid inverter according to the embodiments of the present disclosure, referring to Figure 4, Figure 4 is a schematic diagram of a microgrid system in stable operation according to an embodiment of the present disclosure.

In Figure 4, the horizontal axis represents a time instant, the curve a represents the power of the load, the curve b represents the output power of the inverter, and the curve c represents the frequency of the output voltage of the diesel generator.

In Figure 4, near a time instant 11, a load decrease occurs in the microgrid system, that is, the power of the load decreases, and thus the power provided by the power generation device is greater than the power consumed by the load, resulting in an increase in the frequency of the output voltage of the diesel generator. In order to maintain the stable operation of the microgrid system, the controller decreases the output power of the inverter circuit. When the generation power and the consumption power are balanced, the frequency of the output voltage of the diesel generator is restored to a power frequency.

Similarly, near a time instant t2, a load increase occurs in the microgrid system, that is, the power of the load increases, and thus the power provided by the power generation device is less than the power consumed by the load, resulting in a decrease in the frequency of the output voltage of the diesel generator. The controller detects the decrease in the frequency, and increases the output power of the inverter. When the generation power and the consumption power are balanced, the frequency of the output voltage of the diesel generator is restored to the power frequency.

In an embodiment, the controller may modify the output power of the inverter circuit by modifying an output current of the inverter circuit.

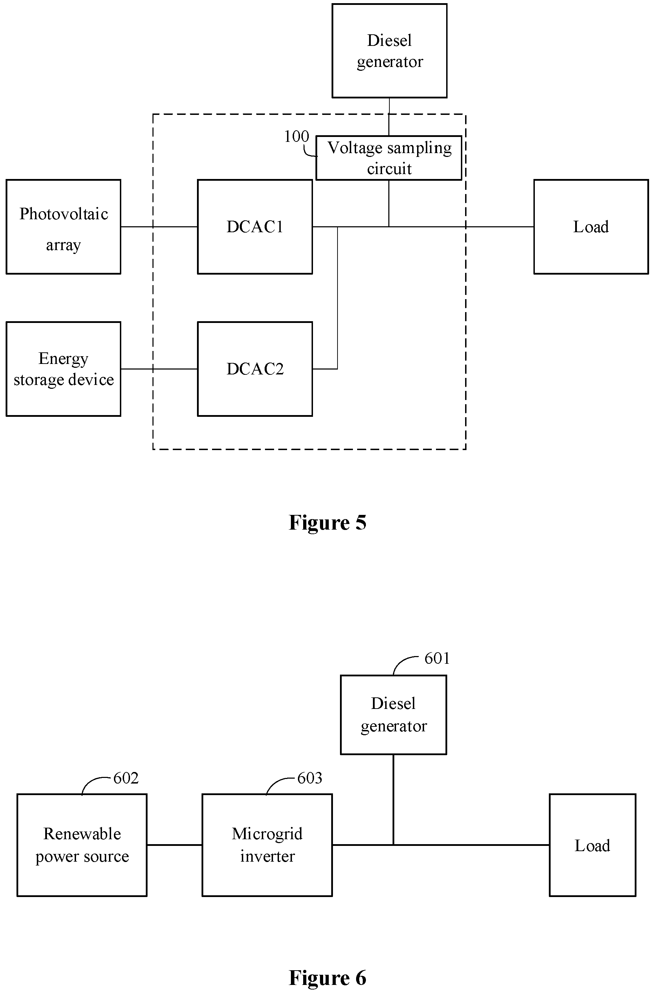

In some embodiments, the renewable power source includes a photovoltaic array and an energy storage device. Referring to Figure 5, Figure 5 is a schematic diagram of a microgrid inverter according to another embodiment of the present disclosure.

Similar to the above embodiments, the microgrid inverter according to the embodiment of the present disclosure includes: a controller (not shown in Figure 5), an inverter circuit DCAC, and a voltage sampling circuit 100.

The renewable power source includes a photovoltaic array PV and an energy storage device Battery. Correspondingly, the inverter circuit includes: a first inverter circuit DCAC1 and a second inverter circuit DCAC2.

A first terminal of the first inverter circuit DCAC1 is configured to connect the photovoltaic array PV A second terminal of the first inverter circuit DCAC1 and a second terminal of the second inverter circuit DCAC2 are connected to a grid-connected port of the microgrid inverter.

A first terminal of the second inverter circuit DCAC2 is configured to connect the energy storage device Battery.

Similar to the above embodiments, the controller is configured to obtain the frequency of the output voltage, and modify the output power of the inverter circuit based on the frequency of the output voltage. A direction in which the output power is modified is opposite to a direction in which the frequency varies.

Specifically, in modifying the output power of the inverter circuit, the output power of the first inverter circuit DCAC1 may be first modified or the output power of the second inverter circuit DCAC2 may be first modified, which is not limited in the present disclosure. To maximize the utilization of the photovoltaic array, it is preferable to first modify the output power of the second inverter circuit DCAC2 to modify the output power of the inverter circuit.

In the embodiment, the renewable power source includes the photovoltaic array and the energy storage device. The energy storage device may provide electrical energy and store electrical energy. Therefore, in the embodiment, the output power of the second inverter circuit DCAC2 may be negative, indicating that the energy storage device absorbs and stores power.

Based on the microgrid inverter according to the above embodiments, a microgrid system is further provided according to an embodiment of the present disclosure, which is described below in detail in conjunction with the drawings.

Referring to Figure 6, Figure 6 is a schematic diagram of a microgrid system according to an embodiment of the present disclosure.

The microgrid system according to the embodiment of the present disclosure includes: a diesel generator 601, a renewable power source 602, and the microgrid inverter 603 described in the above embodiments.

A first terminal of the microgrid inverter 603 is connected to the renewable power source 602. A grid-connected port of the microgrid inverter 603 is connected to an output terminal of the diesel generator 601. An off-grid port of the microgrid inverter 603 is configured to connect a load.

The microgrid inverter 603 is configured to control the renewable power source 602 and the diesel generator 601 to supply power to the load.

The specific structure and functions of the microgrid inverter 603 may be referred to the above embodiments, and are not repeated herein.

The microgrid inverter may sample the output voltage of the diesel generator and control the output power of the second terminal of the inverter circuit based on the output voltage of the diesel generator, thereby maintaining the stability of the microgrid system. The output voltage of the diesel generator may be monitored in real time without any communication connection, and the output power of the inverter circuit is modified by monitoring only one parameter, i.e., the output voltage of the diesel generator. The modification process is simple, and has no communication delay, thereby facilitating the stable operation of the microgrid system.

In the microgrid system according to the embodiment of the present disclosure, the type of the direct-current power source connected to a direct-current side of the microgrid inverter is not limited. That is, the renewable power source may include at least one of the photovoltaic array and the energy storage device.

In a case that the renewable power source includes the photovoltaic array, the inverter circuit includes a first inverter circuit. A first terminal of the first inverter circuit is connected to the photovoltaic array, and a second terminal of the first inverter circuit is connected to the grid-connected port.

In a case that the renewable power source includes the photovoltaic array and the energy storage device, the inverter circuit includes the first inverter circuit and a second inverter circuit. A first terminal of the first inverter circuit is connected to the photovoltaic array, and a second terminal of the first inverter circuit is connected to a second terminal of the second inverter circuit. A first terminal of the second inverter circuit is connected to the energy storage device, and a second terminal of the second inverter circuit is connected to the grid-connected port.

Based on the microgrid inverter and the microgrid system according to the above embodiments, a method for controlling a microgrid inverter is further provided according to an embodiment of the present disclosure, which is described below in detail in conjunction with the drawings.

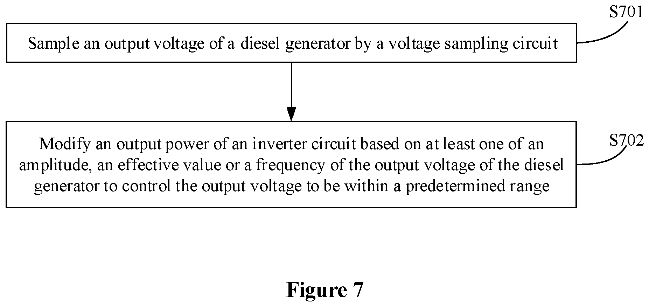

Referring to Figure 7, Figure 7 is a flowchart of a method for controlling a microgrid inverter according to an embodiment of the present disclosure.

The method for controlling a microgrid inverter according to the embodiment of the present disclosure is applied to the microgrid inverter described in the above embodiments.

The method includes the following steps S701 and S702.

In step S701, an output voltage of the diesel generator is sampled by the voltage sampling circuit.

In step S702, an output power of the inverter circuit is modified based on at least one of an amplitude, an effective value or a frequency of the output voltage of the diesel generator to control the output voltage to be within a predetermined range.

In a case of power balance of the microgrid system, the frequency of the output voltage of the diesel generator remains stable. In the microgrid system, in a case that a power provided by the power generation device is greater than a power consumed by the load, the frequency of the output voltage increases; and in a case that the power provided by the power generation device is less than the power consumed by the load, the frequency of the output voltage decreases. Therefore, it is determined whether power balance is achieved between various parts of the microgrid system by monitoring the frequency of the output voltage of the diesel generator, and thus the power is modified based on the frequency of the output voltage.

With the method for controlling a microgrid inverter according to the embodiment of the present disclosure, the output voltage of the diesel generator is sampled by the voltage sampling circuit, and the output power of the second terminal of the inverter circuit is modified based on the frequency of the output voltage. The direction in which the output power is modified is opposite to a direction in which the frequency varies. Only the output voltage of the diesel generator is sampled, and the output power of the second terminal of the inverter circuit is modified based on the frequency of the output voltage to perform power scheduling without any communication connection. The modification process is simple and has no communication delay, improving the accuracy of the power modification.

In the embodiments of the present disclosure, it is not limited to modifying the output power of the inverter circuit based on the amplitude, the effective value or the frequency of the output voltage, and the modification may be performed based on any one of the amplitude and the effective value and the frequency of the output voltage. For example, the controller is configured to modify the output power of the inverter circuit based on the amplitude of the output voltage of the diesel generator to control the amplitude of the output voltage to be within a predetermined amplitude range.

To achieve high efficiency and timely response, the frequency may serve as a response parameter. The output power of the inverter circuit is modified based on the frequency, thereby achieving a rapid response and preventing power from being injected back to the diesel generator.

In an embodiment, the output power of the inverter circuit is modified based on the frequency of the output voltage by: obtaining the frequency of the output voltage; and decreasing, in a case that the frequency of the output voltage is greater than a maximum value in a predetermined frequency range, the output power of the inverter circuit to control the frequency of the output voltage to be within the predetermined frequency range.

In an embodiment, the output power of the inverter circuit is modified based on the frequency of the output voltage by: obtaining the frequency of the output voltage; and increasing, in a case that the frequency of the output voltage is less than a minimum value in a predetermined frequency range, the output power of the inverter circuit to control the frequency of the output voltage to be within the predetermined frequency range.

In an embodiment, the output power of the inverter circuit is modified based on the output voltage by: modifying the output power of the inverter circuit based on a difference between the frequency of the output voltage and the predetermined frequency range to control the frequency of the output voltage to be within the predetermined frequency range.

In an embodiment, the output power of the inverter circuit is modified based on the output voltage by: modifying the output power of the inverter circuit based on a mapping relationship between the frequency of the output voltage and a power to control the frequency of the output voltage to be within the predetermined frequency range.

It should be noted that the embodiments in this specification are described in a progressive manner. Each of the embodiments focuses on differences from other embodiments, and the same or similar parts among the embodiments may be referred to each other.

Based on the above description of the disclosed embodiments, those skilled in the art can implement or carry out the present disclosure. It is apparent for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. A microgrid inverter, comprising:
an inverter circuit, wherein, a first terminal of the inverter circuit is configured to connect a renewable power source, an off-grid port of the inverter circuit is configured to connect a load, and a grid-connected port of the inverter circuit is configured to connect an output terminal of a diesel generator;
a voltage sampling circuit, configured to sample an output voltage of the diesel generator; and
a controller, wherein the controller is configured to modify an output power of the inverter circuit based on at least one of an amplitude, an effective value or a frequency of the output voltage of the diesel generator to control the output voltage to be within a predetermined range.

2. The microgrid inverter according to claim 1, wherein the controller is configured to:
obtain the frequency of the output voltage; and
decrease, in a case that the frequency of the output voltage is greater than a maximum value in a predetermined frequency range, the output power of the inverter circuit to control the frequency of the output voltage to be within the predetermined frequency range.

3. The microgrid inverter according to claim 1 or 2, wherein the controller is configured to:
obtain the frequency of the output voltage; and
increase, in a case that the frequency of the output voltage is less than a minimum value in a predetermined frequency range, the output power of the inverter circuit to control the frequency of the output voltage to be within the predetermined frequency range.

4. The microgrid inverter according to claim 2 or 3, wherein the controller is configured to:
modify the output power of the inverter circuit based on a difference between the frequency of the output voltage and the predetermined frequency range to control the frequency of the output voltage to be within the predetermined frequency range.

5. The microgrid inverter according to claim 2 or 3, wherein the controller is configured to:
modify the output power of the inverter circuit based on a mapping relationship between the frequency of the output voltage and a power to control the frequency of the output voltage to be within the predetermined frequency range.

6. The microgrid inverter according to claim 1, wherein for modifying the output power of the inverter circuit, the controller is configured to:
obtain the frequency of the output voltage; and
modify, in a case that the frequency of the output voltage is not within the predetermined frequency range, an output current of the inverter circuit based on the frequency of the output voltage to control the frequency of the output voltage to be within the predetermined frequency range.

7. The microgrid inverter according to any one of claims 1 to 6, wherein the controller is configured to modify the output power of the inverter circuit based on the amplitude of the output voltage of the diesel generator to control the amplitude of the output voltage to be within a predetermined amplitude range.

8. A microgrid system, comprising:
a diesel generator,
a renewable power source, and
the microgrid inverter according to any one of claims 1 to 7, wherein
a first terminal of the microgrid inverter is connected to the renewable power source;
a grid-connected port of the microgrid inverter is connected to an output terminal of the diesel generator;
an off-grid port of the microgrid inverter is configured to connect a load; and
the microgrid inverter is configured to supply power to the load.

9. The microgrid system according to claim 8, wherein
the renewable power source comprises at least one of a photovoltaic array and an energy storage device;
in a case that the renewable power source comprises the photovoltaic array, the inverter circuit comprises a first inverter circuit, a first terminal of the first inverter circuit is connected to the photovoltaic array, and a second terminal of the first inverter circuit is connected to the grid-connected port; and
in a case that the renewable power source comprises the energy storage device, the inverter circuit comprises a second inverter circuit, a first terminal of the second inverter circuit is connected to the energy storage device, and a second terminal of the second inverter circuit is connected to the grid-connected port.

10. A method for controlling a microgrid inverter, wherein
the microgrid inverter comprises an inverter circuit and a voltage sampling circuit, a first terminal of the inverter circuit is configured to connect a renewable power source, an off-grid port of the inverter circuit is configured to connect to a load, and a grid-connected port of the inverter circuit is configured to connect an output terminal of a diesel generator; and
the method comprises:
sampling an output voltage of the diesel generator by the voltage sampling circuit; and
modifying an output power of the inverter circuit based on at least one of an amplitude, an effective value or a frequency of the output voltage of the diesel generator to control the output voltage to be within a predetermined range.

11. The method according to claim 10, wherein the modifying an output power of the inverter circuit based on a frequency of the output voltage comprises:
obtaining the frequency of the output voltage; and
decreasing, in a case that the frequency of the output voltage is greater than a maximum value in a predetermined frequency range, the output power of the inverter circuit to control the frequency of the output voltage to be within the predetermined frequency range.

12. The method according to claim 10, wherein the modifying an output power of the inverter circuit based on a frequency of the output voltage comprises:
obtaining the frequency of the output voltage; and
increasing, in a case that the frequency of the output voltage is less than a minimum value in a predetermined frequency range, the output power of the inverter circuit to control the frequency of the output voltage to be within the predetermined frequency range.

13. The method according to claim 11 or 12, wherein the modifying an output power of the inverter circuit based on the output voltage comprises:
modifying the output power of the inverter circuit based on a difference between the frequency of the output voltage and the predetermined frequency range to control the frequency of the output voltage to be within the predetermined frequency range.

14. The method according to claim 11 or 12, wherein the modifying an output power of the inverter circuit based on the output voltage comprises:
modifying the output power of the inverter circuit based on a mapping relationship between the frequency of the output voltage and a power to control the frequency of the output voltage to be within the predetermined frequency range.
